# DEMANDE DE BREVET EUROPEEN

(11) **EP 3 575 118 A1**
(43) Date de publication de la demande: **04.12.2019**
(21) Numéro de dépôt: 19177033.8
(22) Date de dépôt: 28.05.2019
(51) Int. Cl.: B60K 11/04, F01P 5/02

(54) **SYSTEME DE REGULATION THERMIQUE DESTINE A UN VEHICULE ELECTRIQUE OU HYBRIDE**

(30) Priorité: 31.05.2018 FR 1854748
(71) Demandeur: Valeo Systemes Thermiques-THS, 78322 Le Mesnil Saint Denis Cedex (FR)
(72) Inventeur: BIREAUD, Fabien, 78322 LE MESNIL SAINT-DENIS CEDEX (FR); BENOUALI, Jugurtha, 78322 LE MESNIL SAINT-DENIS CEDEX (FR); GESSIER, Bertrand, 78322 LE MESNIL SAINT DENIS CEDEX (FR); BLANDIN, Jérémy, 78322 LE MESNIL SAINT DENIS CEDEX (FR)
(74) Mandataire: Tran, Chi-Hai

(57) **Abrégé**

Système de régulation thermique (3) destiné à un véhicule électrique ou hybride, comprenant une entrée d'air (30), un échangeur thermique (31) et un premier groupe moto-ventilateur (32) configuré pour participer à générer un flux d'air (FA) au travers de l'entrée d'air et l'échangeur thermique, caractérisé en ce qu'il comprend en outre une première sortie d'air (33), au moins un deuxième groupe moto-ventilateur (34) et une deuxième sortie d'air (35), la première sortie d'air étant équipée d'un moyen d'obturation (330) configuré pour prendre au moins une première position ouverte dans laquelle il autorise la circulation du flux d'air à travers la première sortie d'air et une deuxième position fermée dans laquelle il obstrue la circulation du flux d'air à travers la première sortie d'air, le flux d'air étant apte à sortir du système de régulation thermique par la deuxième sortie d'air lorsque le moyen d'obturation est dans sa deuxième position fermée.

## Description

Le domaine de la présente invention concerne les systèmes de traitement thermique pour véhicule, notamment pour véhicule automobile, et plus particulièrement, la présente invention se rapporte aux systèmes de traitement thermique destinés aux véhicules automobiles électriques ou hybrides.

Le réchauffement climatique ainsi que le tarissement des sources d'énergies fossiles poussent aujourd'hui les constructeurs automobiles à investir dans le développement de véhicules moins polluants et moins consommateurs de carburants traditionnels. Ainsi, ces dernières années ont vu émerger de nouveaux véhicules fonctionnant, au moins partiellement, grâce à l'énergie électrique.

Ces véhicules, qu'ils soient totalement électriques ou bien hybrides, c'est-à-dire combinant l'utilisation d'un moteur thermique et d'un moteur électrique, nécessitent donc un approvisionnement en énergie électrique conséquent et sont équipés de dispositifs de stockage électrique, comportant généralement plusieurs modules de batteries. Des modules de batteries, c'est-à-dire une pluralité de cellules électriques connectées entre elles, sont ainsi agencés sous le châssis de ces véhicules. Ces modules de batteries supportent mal de fonctionner en dehors d'une plage de températures déterminées. Notamment, afin d'optimiser le fonctionnement et la durée de vie de ces dernières, il convient de les maintenir à une température inférieure à 45°C.

Il est connu d'utiliser un circuit de fluide réfrigérant, par ailleurs utilisé pour chauffer ou refroidir différentes zones ou différents composants du véhicule, pour refroidir le dispositif de stockage électrique. Le circuit de fluide réfrigérant fournit ainsi l'énergie capable de refroidir le dispositif de stockage électrique pendant son utilisation en phases de roulage.

A titre d'exemple, le circuit de fluide réfrigérant peut être suffisant pour refroidir les batteries lors d'une phase de charge classique du dispositif de stockage électrique du véhicule, à savoir une phase de charge réalisée en raccordant le véhicule pendant plusieurs heures au réseau électrique domestique. Cette technique de charge permet de maintenir la température du dispositif de stockage électrique en dessous d'un certain seuil, ce qui permet de réduire les dimensions du système de refroidissement du dispositif de stockage électrique.

Une nouvelle technique de charge a fait son apparition récemment. Elle consiste à charger le dispositif de stockage électrique sous une tension et un ampérage élevés, de manière à charger le dispositif de stockage électrique en un temps maximum de quelques dizaines de minutes. Cette charge rapide implique de pouvoir augmenter la capacité de refroidissement des systèmes de refroidissement du véhicule. Toutefois, si le besoin en refroidissement du dispositif de stockage électrique est très important lors des phases de charge rapide, ce besoin diminue lors de phases de roulage ou de charge dite « classique ». Un système de traitement thermique surdimensionné est alors, entres autres, inutilement consommateur d'énergie ou générateur de poids et/ou d'encombrement.

La présente invention s'inscrit dans ce contexte et propose une solution permettant d'augmenter ponctuellement la capacité de refroidissement d'un système de régulation thermique.

Un objet de la présente invention concerne ainsi un système de régulation thermique destiné à un véhicule électrique ou hybride, comprenant au moins une entrée d'air, au moins un échangeur thermique et un premier groupe moto-ventilateur, le premier groupe moto-ventilateur étant configuré pour participer à générer un flux d'air apte à entrer dans le système de régulation thermique par l'au moins une entrée d'air et à traverser l'échangeur thermique. Selon l'invention, le système de régulation thermique comprend en outre, en aval du premier groupe moto-ventilateur par rapport à un sens de propagation du flux d'air et dans cet ordre selon ce sens de propagation du flux d'air, une première sortie d'air, au moins un deuxième groupe moto-ventilateur et une deuxième sortie d'air, la première sortie d'air étant équipée d'un moyen d'obturation configuré pour prendre au moins une première position ouverte dans laquelle il autorise la circulation du flux d'air à travers la première sortie d'air et une deuxième position fermée dans laquelle il obstrue la circulation du flux d'air à travers la première sortie d'air, le flux d'air étant apte à sortir du système de régulation thermique par la deuxième sortie d'air lorsque le moyen d'obturation est dans sa deuxième position fermée.

On entend par « traverser l'échangeur thermique » le fait que le flux d'air est apte à traverser un faisceau d'échange de chaleur de l'échangeur thermique, ce faisceau d'échange de chaleur étant parcouru par un fluide apte à échanger des calories avec ce flux d'air. Par exemple, ce fluide peut être un fluide réfrigérant ou un fluide caloporteur.

Avantageusement, le deuxième groupe moto-ventilateur est configuré pour augmenter le débit du flux d'air pendant une durée limitée. On comprend qu'en augmentant le débit du flux d'air qui traverse l'échangeur thermique on augmente également la capacité de refroidissement du système de régulation thermique qui comprend cet échangeur thermique. En d'autres termes le deuxième groupe moto-ventilateur permet avantageusement d'augmenter ponctuellement la capacité de refroidissement du système de régulation thermique selon l'invention.

Par exemple, le système de régulation thermique selon l'invention peut être destiné au traitement thermique d'un dispositif de stockage électrique du véhicule. Ainsi, le deuxième groupe moto-ventilateur pourra par exemple être mis en marche lors de phases de charge rapide du dispositif de stockage électrique, c'est-à-dire lorsque le besoin en refroidissement de ce dispositif de stockage électrique augmente, et être arrêté lors de phases de roulage dans lesquelles le flux d'air généré par le premier groupe moto-ventilateur est suffisant pour combler le besoin en refroidissement de ce dispositif de stockage électrique.

Selon une caractéristique de la présente invention, le système de régulation thermique comprend au moins un module de commande configuré pour piloter le moyen d'obturation entre sa première position et sa deuxième position et pour mettre en fonctionnement et arrêter le deuxième groupe moto-ventilateur.

Selon l'invention, le module de commande est configuré pour envoyer, simultanément, une instruction de fermeture du moyen d'obturation de la première sortie d'air et une instruction de mise en marche du deuxième groupe moto-ventilateur.

Par exemple, le module de commande peut être configuré pour envoyer ces instructions simultanées lorsqu'il reçoit une information selon laquelle le dispositif de stockage électrique est en phase de charge rapide. Cette information peut par exemple être envoyée au module de commande directement par le dispositif de stockage électrique. On comprend que lorsque le dispositif de stockage électrique est en phase de charge rapide, le besoin en refroidissement de ce dernier augmente et le fonctionnement du premier groupe moto-ventilateur seul n'est pas suffisant pour combler ce besoin en refroidissement. Ainsi, la mise en marche du deuxième groupe moto-ventilateur, simultanément avec le premier groupe moto-ventilateur, permet avantageusement d'augmenter ponctuellement le débit du flux d'air qui traverse l'au moins un échangeur de chaleur, et donc d'augmenter la capacité en refroidissement du système de régulation thermique équipé de cet au moins un échangeur de chaleur. Ainsi, ce deuxième groupe moto-ventilateur pourra par exemple être mis en marche le temps que dure la phase de charge rapide du dispositif de stockage électrique afin de maintenir ce dernier à une température de fonctionnement optimal. Tel que précédemment mentionné, lorsque le deuxième groupe moto-ventilateur est en fonctionnement, le flux d'air est apte à sortir par la deuxième sortie d'air ménagée en aval du deuxième groupe moto-ventilateur, la première sortie d'air pouvant alors être obturée.

Selon l'invention, le module de commande peut également être configuré pour envoyer, simultanément, une instruction d'ouverture du moyen d'obturation de la première sortie d'air et une instruction d'arrêt du deuxième groupe moto-ventilateur.

Par exemple, le module de commande peut être configuré pour envoyer ces instructions simultanées lorsqu'il reçoit une information selon laquelle le dispositif de stockage électrique est en phase de roulage. Tel que précédemment, cette information selon laquelle le dispositif de stockage électrique est en phase de roulage peut par exemple être envoyée directement par le dispositif de stockage électrique.

On comprend que la mise en fonctionnement simultanée des deux groupes moto-ventilateur est d'une part consommatrice d'énergie et d'autre part que la fermeture de la première sortie d'air, couplée à l'arrêt du deuxième groupe moto-ventilateur, entraine une perte de charge du flux d'air généré. En effet, la deuxième sortie d'air étant agencée en aval du deuxième groupe moto-ventilateur, le débit du flux d'air est amené à diminuer progressivement le long de son trajet, résultant en une diminution de la capacité de refroidissement du système de régulation thermique. Aussi, lorsque le dispositif de stockage électrique est en phase de roulage et que le premier groupe moto-ventilateur est suffisant pour répondre au besoin en refroidissement du dispositif de stockage électrique, le deuxième groupe moto-ventilateur peut être coupé et le moyen d'obturation de la première sortie d'air ouvert, l'arrêt du deuxième groupe moto-ventilateur limitant la surconsommation liée à l'utilisation simultanée des deux groupes moto-ventilateurs et l'ouverture de la première sortie d'air limitant la perte de charge du flux d'air, c'est-à-dire la réduction du débit de ce flux d'air.

Selon une variante de la présente invention, le système de régulation thermique comprend un premier module de commande configuré pour piloter le moyen d'obturation de la première sortie d'air et un deuxième module de commande configuré pour piloter le deuxième groupe moto-ventilateur. Selon cette variante de la présente invention, le premier module de commande et le deuxième module de commande sont alors configurés pour piloter le moyen d'obturation de la première sortie d'air et le deuxième groupe moto-ventilateur de façon coordonnée. En d'autres termes, selon cette variante, lorsque le premier module de commande envoie une instruction de fermeture au moyen d'obturation, le deuxième module de commande envoie, simultanément, une instruction de mise en marche du deuxième groupe moto-ventilateur. De la même manière, lorsque le premier module de commande envoie une instruction d'ouverture du moyen d'obturation de la première sortie d'air, le deuxième module de commande est configuré pour envoyer, simultanément, une instruction d'arrêt du deuxième groupe moto-ventilateur.

Par exemple, le moyen d'obturation de la première sortie d'air peut être un clapet.

Selon une caractéristique de la présente invention, le deuxième groupe moto-ventilateur peut être une turbine.

La présente invention concerne également un véhicule électrique ou hybride comprenant un système de régulation thermique selon l'invention.

Selon une caractéristique de la présente invention, la première sortie d'air du système de régulation thermique est ménagée de sorte à créer, lorsque le véhicule est en déplacement, un phénomène d'aspiration du flux d'air en aval de cette première sortie d'air par rapport au sens de propagation du flux d'air à travers le système de régulation thermique. Par exemple, cette première sortie d'air peut ainsi être ménagée dans un plancher du véhicule, c'est-à-dire au plus près de la route sur laquelle circule ce véhicule. Ainsi, cette première sortie d'air permet de diriger le flux d'air sous le véhicule, une fois que ce dernier a traversé le(s) échangeur(s) de chaleur du système de régulation thermique.

Avantageusement, en phase de roulage, ce phénomène d'aspiration du flux d'air en aval de la première sortie d'air facilite l'évacuation du flux d'air généré au moins en partie par le premier groupe moto-ventilateur. En phase de charge rapide en revanche, le positionnement de cette première sortie d'air génère une gêne sonore. Ainsi, en fermant le moyen d'obturation de cette première sortie d'air lors des phases de charge rapide le confort des utilisateurs du véhicule est amélioré et ces derniers peuvent rester dans le véhicule ou à proximité de celui-ci lors de ces phases de charge rapide.

Par exemple, le système de traitement thermique selon l'invention peut être destiné au traitement thermique d'un dispositif de stockage électrique destiné à l'alimentation d'un moteur électrique qui assure tout ou partie du déplacement du véhicule.

Selon un agencement de la présente invention, au moins l'entrée d'air, l'échangeur thermique et le premier groupe moto-ventilateur du système de régulation thermique sont agencés en face avant du véhicule et le deuxième groupe moto-ventilateur de ce système de régulation thermique est agencé à distance de cette face avant.

On comprend que l'espace disponible en face avant d'un véhicule étant limité, la délocalisation du deuxième groupe moto-ventilateur à distance de cette face avant permet avantageusement de répondre à cette contrainte d'encombrement.

D'autres caractéristiques, détails et avantages ressortiront plus clairement à la lecture de la description détaillée donnée ci-après à titre indicatif en relation avec un exemple d'application du système de régulation thermique selon l'invention illustré sur les figures suivantes :
- la figure 1 illustre schématiquement une face avant d'un véhicule sur lequel est intégré un système de régulation thermique selon la présente invention, ce système de régulation thermique n'étant que partiellement représenté ;
- les figures 2 et 3 représentent schématiquement le système de régulation thermique selon la présente invention, selon deux exemples de fonctionnement.

Dans la description qui va suivre, les termes « amont » et « aval » doivent être compris par rapport à un sens de propagation d'un flux d'air FA à travers un système de régulation thermique selon l'invention.

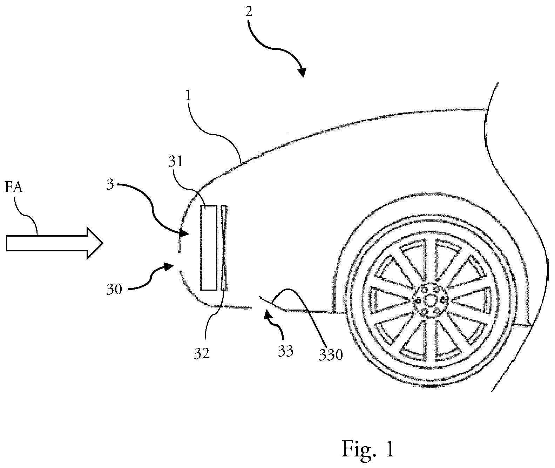

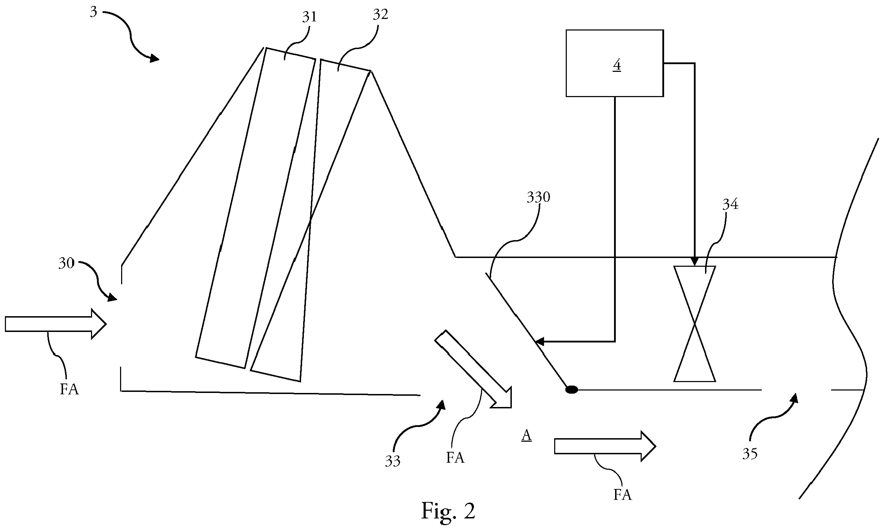

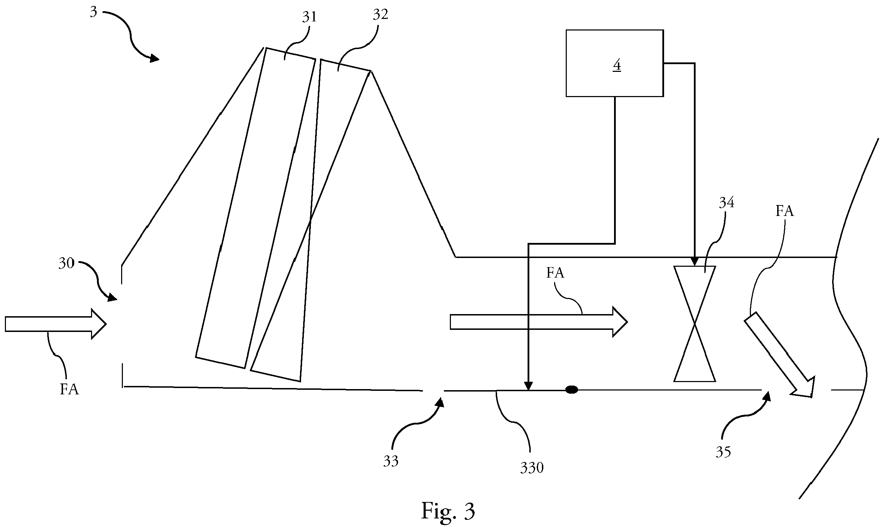

La figure 1 illustre, da façon schématique une face avant 1 d'un véhicule 2 sur lequel est intégré un système de régulation thermique 3 selon l'invention. Tel que partiellement illustré sur cette figure 1, le système de régulation thermique 3 selon l'invention comprend notamment, une entrée d'air 30, au moins un échangeur thermique 31, un premier groupe moto-ventilateur 32, une première sortie d'air 33, un deuxième groupe moto-ventilateur - par exemple illustré sur les figures 2 et 3, et une deuxième sortie d'air - également représentée sur les figures 2 et 3.

On comprend de la figure 1 que seuls certains éléments du système de régulation thermique 3 sont agencés dans la face avant 1 du véhicule 2, en l'espèce au moins l'entrée d'air 30, l'échangeur thermique 31 et le premier groupe moto-ventilateur 32. Selon l'exemple illustré sur cette figure 1, la première sortie d'air 33 est également agencée en face avant 1 du véhicule 2 mais il est entendu que cette première sortie d'air 33 pourrait être ménagée à distance de cette face avant 1 sans nuire à l'invention à condition que cette première sortie 33 soit agencée en aval du premier groupe moto-ventilateur 32 et en amont du deuxième groupe moto-ventilateur. Avantageusement, au moins le deuxième groupe moto-ventilateur et la deuxième sortie d'air sont agencés à distance de cette face avant 1, réduisant ainsi l'encombrement du système de régulation thermique 3 dans cette face avant où l'espace disponible est restreint.

Le premier groupe moto-ventilateur 32 est configuré pour générer, au moins partiellement, un flux d'air FA dont un sens de propagation est illustré par une flèche FA sur les figures 1 à 3. On comprend que ce flux d'air FA entre dans la face avant 1 du véhicule 2, et donc dans le système de régulation thermique 3, par l'entrée d'air 30. Cette entrée d'air 30 est par exemple ménagée en un point le plus en avant du véhicule 2, par rapport à un sens de déplacement de ce véhicule 2. Avantageusement, cette entrée d'air 30 peut être pourvue de volets mobiles, non illustrés ici, destinés à réguler partiellement l'arrivée du flux d'air FA dans le système de régulation thermique 3.

Le flux d'air FA est ensuite configuré pour traverser l'échangeur thermique 31, et plus précisément un faisceau d'échange de chaleur de cet échangeur thermique 31. Ce faisceau d'échange de chaleur est parcouru par un fluide, par exemple un fluide réfrigérant ou un fluide caloporteur, destiné à échanger des calories avec le flux d'air FA lorsque celui-ci traverse ce faisceau d'échange de chaleur. Cet échangeur thermique 31 est par exemple agencé sur un circuit de fluide réfrigérant destiné à au traitement thermique d'un dispositif de stockage électrique du véhicule 2. Ce circuit de fluide réfrigérant peut en outre permettre la régulation thermique d'autres composants du véhicule 2. Il est entendu que le dispositif de stockage électrique dont il est fait mention ici fait référence à un dispositif de stockage électrique destiné à alimenter un moteur électrique qui assure au moins une partie des déplacements du véhicule 2.

Tel qu'on peut le voir, la première sortie d'air 33 est équipée d'un moyen d'obturation 330. Tel que cela sera plus amplement détaillé, notamment en référence aux figures 2 et 3, ce moyen d'obturation 330 peut prendre une première position ouverte dans laquelle il autorise le flux d'air FA à circuler à travers cette première sortie d'air 33 et une deuxième position fermée dans laquelle il obstrue, au moins partiellement, la circulation du flux d'air FA à travers cette première sortie d'air 33. Par exemple ce moyen d'obturation 330 peut être un clapet.

Tel qu'illustré, la première sortie d'air 33 est avantageusement ménagée dans une portion inférieure du véhicule 2, par exemple dans le plancher de ce véhicule. Autrement dit, cette première sortie d'air 33 est ménagée dans une portion de ce véhicule 2 proche de la route sur laquelle il se déplace. Ainsi, lorsque le véhicule 2 est en déplacement, un phénomène d'aspiration se créé en aval de cette première sortie d'air 33, par rapport au sens de propagation du flux d'air FA. Ce phénomène d'aspiration permet avantageusement de faciliter la circulation et l'évacuation du flux d'air FA généré, en accélérant la vitesse de propagation de ce flux d'air FA en aval de la première sortie d'air 33.

Il convient de noter que la première sortie d'air 33 est représentée au niveau de la face avant 1 du véhicule 2 sur la figure 1 mais cette première sortie d'air 33 pourrait être ménagée à distance de cette face avant 1. En tout état de cause, cette première sortie d'air 33 est ménagée entre le premier groupe moto-ventilateur 32 et le deuxième groupe moto-ventilateur 34, sur le trajet emprunté par le flux d'air FA en sortie de ce premier groupe moto-ventilateur 32.

Le système de régulation thermique 3 selon l'invention comprend en outre au moins un module de commande 4, par exemple représenté sur les figures 2 et 3, configuré pour piloter le moyen d'obturation 330 de la première sortie d'air 33 ainsi que pour piloter la mise en marche et l'arrêt du deuxième groupe moto-ventilateur 34. Selon l'exemple illustré sur ces figures 2 et 3, la mise en marche du deuxième groupe moto-ventilateur, l'arrêt de ce deuxième groupe moto-ventilateur et le déplacement du moyen d'obturation 330 de la première sortie d'air 33 sont pilotés par un seul module de commande 4 mais il est entendu que le système de régulation thermique 3 selon l'invention pourrait comprendre un premier module de commande configuré pour piloter le déplacement du moyen d'obturation 330 et un deuxième module de commande pour piloter la mise en marche et l'arrêt du deuxième groupe moto-ventilateur sans sortir du contexte de l'invention.

Nous allons maintenant décrire plus en détail le fonctionnement du système de régulation thermique 3 selon un exemple d'application de la présente invention dans lequel le système de régulation thermique 3 est destiné au moins au traitement thermique du dispositif de stockage électrique du véhicule 2 sur lequel est intégré ce système de régulation thermique 3.

Les figures 2 et 3 illustrent ainsi, toutes deux, schématiquement, le système de régulation 3 qui vient d'être partiellement décrit. Sur ces figures, l'échangeur thermique 31 et le premier groupe moto-ventilateur 32 sont agencés obliquement par rapport au sens de propagation du flux d'air FA afin de répondre aux contraintes d'encombrement inhérentes à la localisation de cet échangeur thermique 31 et de ce premier groupe moto-ventilateur 32 dans la face avant du véhicule. Il est entendu que cet agencement n'est donné qu'à titre d'exemple et qu'il n'est pas limitatif de l'orientation que peuvent prendre cet échangeur thermique 31 et ce premier groupe moto-ventilateur 32.

Sur ces figures sont notamment également représentés le deuxième groupe moto-ventilateur 34 et la deuxième sortie d'air 35.

La figure 2 illustre une première situation dans laquelle le dispositif de stockage électrique thermiquement régulé par le système de régulation thermique 3 selon l'invention est en phase de roulage, c'est-à-dire une situation dans laquelle le dispositif de stockage électrique alimente le moteur électrique destiné au déplacement du véhicule. Dans cette première situation, on observe que le moyen d'obturation 330 de la première sortie d'air 33 est dans sa première position ouverte, c'est-à-dire que le flux d'air FA est apte à quitter le véhicule par cette première sortie d'air 33. Tel que précédemment mentionné, dans cette première situation la circulation du flux d'air FA est facilitée et améliorée par le phénomène d'aspiration A créé en aval de la première sortie d'air 33 et qui est notamment généré par la position de cette première sortie d'air 33, couplée au fait que le véhicule est en déplacement.

Lorsque le dispositif de stockage électrique est en phase de roulage, le flux d'air FA généré, au moins en partie, par le premier groupe moto-ventilateur 32 est suffisant pour assurer le refroidissement de ce dispositif de stockage électrique. Le deuxième groupe moto-ventilateur 34 n'est alors pas activé, évitant une surconsommation énergétique inutile qui résulterait de la mise en fonctionnement simultanée des deux groupes moto-ventilateurs 32, 34.

La figure 3 quant à elle illustre une situation dans laquelle le dispositif de stockage électrique thermiquement régulé par le système de régulation thermique 3 selon l'invention est en phase de charge rapide. Dans cette deuxième situation, on observe que le moyen d'obturation 330 de la première sortie d'air 33 est dans sa deuxième position fermée, c'est-à-dire que le flux d'air FA ne peut plus circuler à travers cette première sortie d'air 33, ou à tout le moins que cette circulation est limitée. Ainsi, on comprend que ce flux d'air FA sort du système de régulation thermique 3 par la deuxième sortie d'air 35 positionnée en aval du deuxième groupe moto-ventilateur 34.

Tel que précédemment mentionné, lorsque le dispositif de stockage électrique est en phase de charge rapide, ce dernier s'échauffe et nécessite donc un refroidissement plus important. Lors de ces phases de charge rapide du dispositif de stockage électrique, le deuxième groupe moto-ventilateur 34 est ainsi mis en marche par le module de commande 4 de sorte à augmenter, pour une durée limitée, le débit du flux d'air FA. On comprend que pour augmenter efficacement ce débit du flux d'air FA, le premier groupe moto-ventilateur 32 est, simultanément, maintenu en fonctionnement. Avantageusement, cette augmentation du débit du flux d'air FA permet d'augmenter la capacité de refroidissement de l'échangeur thermique 31 traversé par ce flux d'air FA et donc du système de régulation thermique 3 auquel il appartient.

On comprend donc que lorsque le dispositif de stockage électrique est en phase de charge rapide, la première sortie d'air 33 est fermée par le moyen d'obturation 330 et, simultanément, le deuxième groupe moto-ventilateur 34 est mis en marche. A l'inverse, lorsque le dispositif de stockage électrique est en phase de roulage, le moyen d'obturation 330 de la première sortie d'air 33 est dans sa première position ouverte, laissant le flux d'air FA passer à travers cette première sortie d'air 33 et, simultanément, le deuxième groupe moto-ventilateur 34 est arrêté.

Tel que précédemment décrit, le module de commande 4 est configuré pour piloter à la fois la mise en marche et l'arrêt du deuxième groupe moto-ventilateur 34 et l'ouverture et la fermeture du moyen d'obturation 330 de la première sortie d'air 33. La mise en marche simultanée des deux groupes moto-ventilateur 32, 34 serait inutilement consommatrice d'énergie lorsque le premier groupe moto-ventilateur 32 est suffisant pour assurer le refroidissement du dispositif de stockage électrique. Par ailleurs, lorsque le moyen d'obturation 330 de la première sortie d'air 33 est dans sa deuxième position fermée, le trajet emprunté par le flux d'air FA pour quitter le système de régulation thermique 3 par la deuxième sortie d'air 35 est plus long. Le deuxième groupe moto-ventilateur 34 étant arrêté lors des phases de roulage, l'allongement du trajet emprunté par le flux d'air FA résulterait alors en une perte de charge pour ce flux d'air FA. Une telle perte de charge n'est pas souhaitable car elle résulte en une diminution de la capacité de refroidissement du système de régulation thermique 3.

Ainsi, lorsque le module de commande 4 de ce système de régulation thermique 3 reçoit une information selon laquelle le dispositif de stockage électrique est en phase de roulage, il envoie simultanément une instruction d'ouverture du moyen d'obturation 330 de la première sortie d'air 33 et une instruction d'arrêt du deuxième groupe moto-ventilateur 34. A l'inverse lorsque le module de commande 4 de ce système de régulation thermique 3 reçoit une information selon laquelle le dispositif de stockage électrique est en phase de charge rapide, il envoie, simultanément, une instruction de fermeture du moyen d'obturation 330 de la première sortie d'air 33 et une instruction de mis en marche du deuxième groupe moto-ventilateur 34, le flux d'air FA étant alors apte à quitter le système de régulation thermique par la deuxième sortie d'air 35.

Tel que précédemment mentionné, la première sortie d'air 33 est positionnée de sorte à créer un phénomène d'aspiration A immédiatement en aval de cette première sortie d'air 33, facilitant ainsi la circulation de ce flux d'air FA. Ce phénomène d'aspiration étant en partie dû au déplacement du véhicule, on comprend que lorsque celui-ci est à l'arrêt, tel que c'est par exemple le cas lors des phases de charge rapide du dispositif de stockage électrique, cette aspiration du flux d'air FA n'est plus assurée. De plus, les utilisateurs du véhicule 2 peuvent être confrontés à une gêne sonore liée à la combinaison de l'ouverture de cette première sortie d'air 33 et de la mise en marche du deuxième groupe moto-ventilateur 4. En déplaçant le moyen d'obturation 330 jusqu'à sa deuxième position fermée, cette gêne sonore est réduite, voire totalement supprimée, ce qui permet aux utilisateurs de rester dans le véhicule, ou à proximité de ce dernier, lorsque le dispositif de stockage électrique est en phase de charge rapide.

On comprend que la présente invention permet ainsi avantageusement de moduler la capacité en refroidissement du système de régulation thermique 3, pendant une durée limitée, afin de répondre à une augmentation ponctuelle du besoin en refroidissement du/des élément(s) régulés thermiquement par ce système de régulation thermique 3.

Il est entendu que l'application au refroidissement du dispositif de stockage électrique est ici donnée à titre d'exemple et que la présente invention est également adaptée au refroidissement d'autres composants d'un véhicule automobile.

La présente invention ne saurait toutefois se limiter aux moyens et configurations décrits et illustrés ici et elle s'étend à tous moyens ou configurations équivalents et à toute combinaison techniquement opérante de tels moyens. En particulier, la forme et la disposition du moyen d'obturation de la première sortie d'air et du deuxième groupe moto-ventilateur pourraient être modifiées dans la mesure où elles remplissent les fonctionnalités décrites dans le présent document.

## Revendications

1. Système de régulation thermique (3) destiné à un véhicule (2) électrique ou hybride, comprenant au moins une entrée d'air (30), au moins un échangeur thermique (31) et un premier groupe moto-ventilateur (32), le premier groupe moto-ventilateur (32) étant configuré pour participer à générer un flux d'air (FA) apte à entrer dans le système de régulation thermique (3) par l'au moins une entrée d'air (30) et à traverser l'échangeur thermique (31), **caractérisé en ce que** le système de régulation thermique (3) comprend en outre, en aval du premier groupe moto-ventilateur (32) par rapport à un sens de propagation du flux d'air (FA) et dans cet ordre selon ce sens de propagation du flux d'air (FA), une première sortie d'air (33), au moins un deuxième groupe moto-ventilateur (34) et une deuxième sortie d'air (35), la première sortie d'air (33) étant équipée d'un moyen d'obturation (330) configuré pour prendre au moins une première position ouverte dans laquelle il autorise la circulation du flux d'air (FA) à travers la première sortie d'air (33) et une deuxième position fermée dans laquelle il obstrue la circulation du flux d'air (FA) à travers la première sortie d'air (33), le flux d'air (FA) étant apte à sortir du système de régulation thermique (3) par la deuxième sortie d'air (35) lorsque le moyen d'obturation (330) est dans sa deuxième position fermée.

2. Système de régulation thermique (3) selon la revendication précédente, comprenant au moins un module de commande configuré pour piloter le moyen d'obturation (330) entre sa première position et sa deuxième position et pour mettre en fonctionnement et arrêter le deuxième groupe moto-ventilateur (34).

3. Système de régulation thermique (3) selon la revendication précédente, dans lequel le module de commande (4) est configuré pour envoyer, simultanément, une instruction de fermeture du moyen d'obturation (330) de la première sortie d'air (33) et une instruction de mise en marche du deuxième groupe moto-ventilateur (34).

4. Système de régulation thermique (3) selon l'une quelconque des revendications 2 ou 3, dans lequel le module de commande (4) est configuré pour envoyer, simultanément, une instruction d'ouverture du moyen d'obturation (330) de la première sortie d'air (33) et une instruction d'arrêt du deuxième groupe moto-ventilateur (34).

5. Système de régulation thermique (3) selon l'une quelconque des revendications précédentes, dans lequel le moyen d'obturation (330) de la première sortie d'air (33) est un clapet.

6. Système de régulation thermique (3) selon l'une quelconque des revendications précédentes, dans lequel le deuxième groupe moto-ventilateur (34) est une turbine.

7. Véhicule (2) électrique ou hybride comprenant un système de régulation thermique selon l'une quelconque des revendications précédentes.

8. Véhicule (2) selon la revendication précédente, dans lequel la première sortie d'air (33) du système de régulation thermique (3) est ménagée de sorte à créer, lorsque le véhicule est en déplacement, un phénomène d'aspiration (A) du flux d'air (FA) en aval de cette première sortie d'air (33) par rapport au sens de propagation du flux d'air (FA) à travers le système de régulation thermique (3).

9. Véhicule (2) selon l'une quelconque des revendications 7 ou 8, dans lequel le système de régulation thermique (3) est destiné au traitement thermique d'un dispositif de stockage électrique destiné à l'alimentation d'un moteur électrique qui assure tout ou partie du déplacement du véhicule (2).

10. Véhicule (2) selon l'une quelconque des revendications 7 à 9, dans lequel au moins l'entrée d'air (30), l'échangeur thermique (31) et le premier groupe moto-ventilateur (32) du système de régulation thermique (3) sont agencés en face avant (1) du véhicule (2) et dans lequel le deuxième groupe moto-ventilateur (34) de ce système de régulation thermique (3) est agencé à distance de cette face avant (1).
